# FASCICULE DE BREVET EUROPEEN

(11) **EP 1 792 101 B1**
(45) Date de publication et mention de la délivrance du brevet: **01.09.2010**
(21) Numéro de dépôt: 05799927.8
(22) Date de dépôt: 20.09.2005
(51) Int. Cl.: F16H 3/66

(54) **DISPOSITIF DE TRANSMISSION DE PUISSANCE DANS UN VEHICULE ENTRE UN ARBRE D'UN MOTEUR THERMIQUE ET UN ARBRE DE ROUES**
VORRICHTUNG ZUR LEISTUNGSÜBERTRAGUNG IN EINEM FAHRZEUG ZWISCHEN DER WÄRMEKRAFTMASCHINENWELLE UND EINER RADACHSE
DEVICE FOR POWER TRANSMISSION IN A VEHICLE BETWEEN A HEAT ENGINE SHAFT AND A WHEEL SHAFT

(30) Priorité: 24.09.2004 FR 0452160
(43) Date de publication de la demande: 06.06.2007
(73) Titulaire: Peugeot Citroën Automobiles SA, 78140 Vélizy-Villacoublay (FR)
(72) Inventeur: LENEVEU, Géraud, F-92500 RUEIL-MALMAISON (FR); LAEUFFER, Jacques, F-75007 PARIS (FR); BESNARD, Sébastien, F-92330 SCEAUX (FR)
(86) Numéro de dépôt international: PCT/FR2005/050766
(87) Numéro de publication internationale: WO 2006/032820

(56) Documents cités:
- EP-A- 1 279 545
- EP-A- 1 426 223
- WO-A-03/066363
- FR-A- 2 832 357
- US-A- 5 931 757

## Description

La présente invention concerne un dispositif de transmission de puissance entre un arbre d'un moteur thermique et un arbre de roues d'un véhicule. L'invention a notamment pour but de limiter le nombre de pièces utilisées dans un tel dispositif. La présente invention trouve une application particulièrement avantageuse dans le domaine des véhicules automobiles, mais elle pourrait aussi être mise en oeuvre dans des trains, des bateaux ou des motocyclettes.

On connaît des dispositifs de transmission de puissance entre un arbre d'un moteur thermique et un arbre de roues utilisés dans des véhicules hybrides. De tels dispositifs sont décrits dans la demande FR-A-2832357, qui définit le préambule de la revendication 1.

Ces dispositifs de transmission comportent généralement un moteur thermique, et une paire de machines électriques. L'arbre du moteur, l'arbre des roues et des arbres des machines sont reliés entre eux par l'intermédiaire d'un ensemble mécanique. Les deux machines sont reliées entre elles par l'intermédiaire d'un dispositif de liaison comportant notamment un bus électrique. Ces machines se comportent en moteur ou en générateur en fonction des énergies électriques et mécaniques qu'elles reçoivent respectivement sur leur arbre et sur leurs bornes.

Une puissance fournie par le moteur thermique peut être soit transmise directement à l'arbre de roues par l'intermédiaire de l'ensemble mécanique, soit dérivée dans une chaîne électrique comportant les machines électriques et le dispositif de liaison. La puissance dérivée dans la chaîne électrique est transmise à l'arbre des roues de manière à ajuster le couple appliqué sur cet arbre, tout en adaptant le couple et le régime du moteur thermique à un point de fonctionnement où la consommation de ce moteur est minimale.

Le dispositif de transmission peut comporter ou pas un dispositif de stockage, tel qu'une batterie, relié au bus électrique. Dans le cas ou le dispositif de transmission ne comporte pas de batterie, la puissance dérivée est directement transmise à l'ensemble mécanique. Une telle réalisation du dispositif de transmission permet de limiter le coût global du dispositif de transmission, une batterie étant chère.

Dans le cas où le dispositif de transmission comporte un dispositif de stockage relié au bus électrique, la puissance dérivée peut être stockée totalement ou en partie dans le dispositif de stockage. Le dispositif de stockage permet au dispositif de transmission de présenter davantage de régimes de fonctionnement. Ainsi dans un régime d'accélération particulier, les deux machines fonctionnement simultanément en moteur. Et dans un régime de récupération particulier, les deux machines peuvent fonctionner simultanément en générateur afin de stocker le plus d'énergie possible.

Dans les réalisations existantes, l'ensemble mécanique est en général formé d'un ou plusieurs trains épicycloïdaux. Un train épicycloïdal se définit comme étant un mécanisme formé d'engrenages dont un pignon, ou un groupe de pignons appelés satellites, a son axe animé d'un mouvement circulaire centré sur l'axe commun aux autres pignons appelés couronne et planétaire. Ces satellites sont portés par un porte-satellites. Chaque train épicycloïdal comporte dans le cas général un planétaire, un porte-satellites et une couronne. Chaque train présente donc 3 degrés de liberté en rotation.

Dans l'ensemble mécanique du dispositif de transmission, les trains épicycloïdaux sont reliés entre eux de manière à présenter quatre degrés de libertés: un pour l'arbre du moteur, un autre pour l'arbre de roues et les deux autres pour les deux arbres des machines électriques. Dans une réalisation particulière, le dispositif de transmission comporte deux trains épicycloïdaux. Ces deux trains sont reliés entre eux par deux liaisons afin de limiter leurs 6 degrés de liberté possibles à 4. Dans un exemple, le planétaire d'un premier train est relié à une couronne d'un deuxième train et les portes satellites de ces deux trains sont reliés entre eux.

Toutefois, ces associations de trains rendent le dispositif de transmission encombrant. En effet en reliant le planétaire à une couronne, on perd la mobilité d'un des éléments utiles de l'ensemble mécanique. Par élément utile, on entend un élément auquel on est susceptible de relier un des arbres du dispositif. En outre, la multiplication des disions entre les différents éléments des différents trains augmente les risques de ruptures mécaniques.

Le document US 5 931 757 divulgue un dispositif qui vise à économiser un élément de l'ensemble mécanique, à savoir une couronne. A cet effet, ce document divulgue que les premier et deuxième trains comportent respectivement, au moins un satellite, le satellite du premier train et le satellite du deuxième train étant décalés entre eux de manière à ce qu'ils puissent engréner entre eux.

La présente invention a donc pour but également de limiter le nombre de pièces utilisées dans l'ensemble mécanique, afin de rendre l'ensemble plus compact, sans perdre la mobilité d'un de ses éléments utiles.

A cet effet, dans le dispositif de transmission selon l'invention, on relie les deux trains de manière à ce qu'ils comportent un porte-satellites commun et que leurs satellites soient reliés entre eux.

Le fait que le porte-satellites des trains soit commun permet d'éviter de réaliser une liaison entre deux porte-satellites de deux trains par exemple. Le fait que les satellites engrènent entre eux, permet d'économiser un élément de l'ensemble mécanique.

Plus précisément, en liant les satellites qui ne sont pas des éléments utiles, puisqu'ils n'ont pas vocation à être reliés à des arbres du dispositif, on garde le bénéfice d'un maximum de degrés de liberté de l'ensemble mécanique. Ainsi, avec deux trains épicycloïdaux reliés entre eux selon l'invention, on dispose de 5 degrés de liberté. De ce fait, on peut supprimer un des éléments des deux trains, tel que la couronne d'un des trains, pour obtenir les 4 degrés de liberté nécessaires au bon fonctionnement du dispositif de transmission. En supprimant un de ses éléments, on rend bien évidemment l'ensemble mécanique du dispositif selon l'invention plus compact.

Dans une réalisation de l'invention, les satellites des trains engrènent entre eux. Un tel assemblage de train peut prendre la forme d'un train de type Ravigneaux.

Le dispositif de transmission selon l'invention comporte plusieurs modes de fonctionnement différents. Dans chaque mode de fonctionnement, un arbre d'une des machines est relié à un élément différent d'un des trains.

Par exemple, l'association de deux trains engendre, comme on l'a vu, 5 degrés de libertés lorsqu'on conserve tous les éléments des deux trains. Un degré de liberté est utilisé pour l'arbre du moteur thermique et un autre degré de liberté est utilisé par l'arbre de roues. Les trois autres degrés de liberté permettent de faire fonctionner le dispositif dans trois modes de fonctionnement différents.

Lorsqu'on introduit un nouveau train dans l'ensemble mécanique selon l'invention, on introduit deux nouveaux éléments mobiles auxquels les arbres des machines sont susceptibles d'être reliés. Deux nouveaux modes de fonctionnement possibles pour le dispositif de transmission sont donc susceptibles d'être introduits.

La présente invention concerne donc un dispositif de transmission de puissance, dans un véhicule, entre un arbre d'un moteur thermique et un arbre de roues, conforme à l'objet de la revendication 1.

L'invention sera mieux comprise à la lecture de la description qui suit et à l'examen des figures qui l'accompagnent. Ces figures sont données à titre indicatif mais nullement limitatif de l'invention. Ces figures montrent :
- Figure 1 : une représentation schématique générale d'un dispositif de transmission disposant de deux modes de fonctionnement ;
- Figure 2 : une représentation schématique d'un dispositif de transmission de l'état de la technique ;
- Figure 3 : une représentation schématique d'un dispositif de transmission selon l'invention ;
- Figures 4a-4c : des schémas cinématiques d'un dispositif de transmission selon l'invention dans lequel les satellites des trains engrènent entre eux;
- Figures 6a-6b : des vues de côté et de dessus d'un ensemble mécanique selon l'invention comportant des satellites qui engrènent entre eux ;
- Figures 7a-7b : des vues de côté et de dessus d'un ensemble mécanique selon l'invention comportant des satellites étagés ;
- Figure 8 : une vue de côté d'un ensemble mécanique selon l'invention comportant N trains à satellites étagés.
- Figure 9 : une vue en trois dimensions d'un ensemble mécanique selon l'invention comportant des satellites qui engrènent entre eux.

Les éléments communs aux différentes figures portent la même référence.

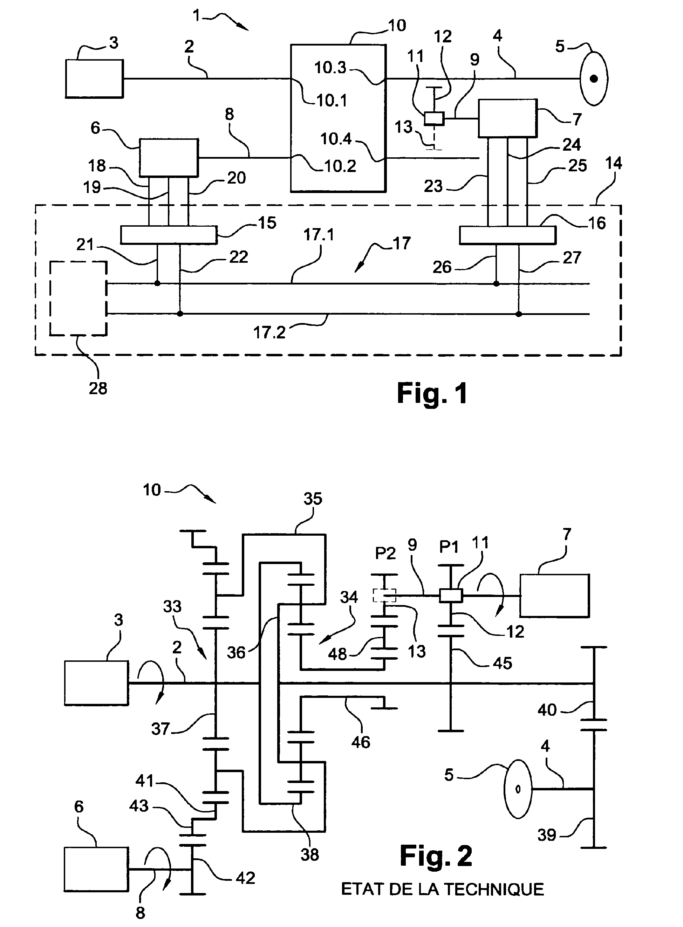

La figure 1 montre un dispositif 1 de transmission entre un arbre 2 d'un moteur 3 thermique et un arbre 4 de roues 5. Ce dispositif 1 comporte une première machine 6 électrique et une deuxième machine 7 électrique. L'arbre 2 du moteur 3, l'arbre 4 de roues 5, l'arbre 8 de la première machine 6 et l'arbre 9 de la deuxième machine 7 sont reliés entre eux par l'intermédiaire d'un ensemble 10 mécanique.

Plus précisément, l'ensemble 10 mécanique est réalisé de manière à présenter 4 degrés de liberté, un pour chaque arbre. Ainsi, l'arbre 2 est relié à un premier élément 10.1 mobile. L'arbre 8 de la première machine 6 est relié à un deuxième élément 10.2 mobile. L'arbre 4 de roues 5 est relié à un troisième élément 10.3 mobile. L'arbre 9 de la deuxième machine 7 est susceptible d'être relié soit au troisième élément 10.3 mobile en prise direct avec l'arbre 4 de roues 5, soit à un quatrième élément 10.4 mobile.

L'arbre 9 de la deuxième machine 7 est relié au troisième élément 10.3 mobile dans un premier mode de fonctionnement du dispositif 1. Ce premier mode est mis en oeuvre pour des rapports de vitesse courts qui correspondent à des vitesses comprises entre 0 et 15km/h, pour une vitesse du moteur thermique de 1000 tours/minute. Ce premier mode de fonctionnement est donc notamment mis en oeuvre lors du démarrage du véhicule. Ce premier mode de fonctionnement est aussi utilisé pour les marches arrière du véhicule.

L'arbre 9 de la deuxième machine 7 est relié au quatrième élément 10.4 mobile dans un deuxième mode de fonctionnement du dispositif 1. Ce deuxième mode est mis en oeuvre pour des rapports de vitesse longs qui correspondent à des vitesses du véhicule supérieures à 15km/h, pour une vitesse du moteur thermique de 1000 tours/minute.

L'accrochage de l'arbre 9 de la deuxième machine 7 au troisième élément 10.3 ou au quatrième élément 10.4 mobile est réalisé par l'intermédiaire notamment d'un élément commutateur 11 et de deux engrenages 12 et 13. Cet élément commutateur 11 prend en général la forme d'un crabot qui ne dissipe quasiment pas d'énergie.

La première et la deuxième machine 6 et 7 sont reliées entre elles par l'intermédiaire d'une chaîne 14 électrique. Cette chaîne 14 électrique comporte notamment un premier onduleur 15, un deuxième onduleur 16, ainsi qu'un bus 17 électrique comportant deux connexions 17.1 et 17.2. Dans la pratique, ce bus électrique 17 est un bus à tension continue. Des phases 18-20 de la première machine 6 sont reliées au premier onduleur 15 qui est lui-même relié aux deux connexions 17.1 et 17.2 du bus 17 par intermédiaire de deux liaisons filaires 21 et 22. Des phases 23-25 de la deuxième machine 7 sont reliées au deuxième onduleur 16 qui est lui-même relié aux deux connexions 17.1 et 17.2 du bus 17 par l'intermédiaire de deux liaisons filaires 26 et 27.

Dans un tel dispositif 1 de transmission, lorsqu'une des machines 6 ou 7 se comporte en générateur, les signaux de tension alternatifs observables entre les phases 18-20 sont transformés en un signal de tension continue observable sur le bus 17, par l'onduleur associé à cette machine. Des transistors (non représentés) de cet onduleur sont alors bloqués, et des diodes (non représentées) reliées entre un collecteur et un émetteur de ces transistors jouent un rôle de pont redresseur.

Dans le cas où une des machines se comporte en moteur, le signal de tension continue observable sur le bus 17 est transformé en signaux de tension alternatifs et déphasés par l'onduleur associé à cette machine. Ces signaux de tension sont appliqués sur les phases 23-25. Les transistors de l'onduleur fonctionnent alors en régime commuté de manière à hacher le signal de tension continue et à faire onduler le signal de tension qui est appliqué à ses bornes.

En général, les machines 6 et 7 sont des machines synchrones triphasées qui ont l'avantage d'être compactes et de présenter un bon rendement.

Dans le cas où aucun système de stockage n'est relié au bus 17, l'énergie produite par une des machines est automatiquement consommée par l'autre machine. En variante, un système de stockage, tel qu'une batterie 28, est relié au bus 17. Dans une phase de récupération particulière, les deux machines 6 et 7 peuvent fonctionner simultanément en générateur de manière à stocker le plus d'énergie possible dans la batterie. En particulier, cette phase peut être mise en oeuvre en ville, lorsque le véhicule freine.

De préférence, lors du passage d'un mode à un autre, la puissance dans la chaîne électrique est nulle de manière à limiter le couple observable sur l'arbre le long duquel se déplace le crabot. On obtient une puissance nulle en annulant la vitesse de rotation de l'arbre de la machine 6.

La figure 2 montre une représentation schématique d'un dispositif 1 de transmission réalisé selon l'état de la technique. Pour plus de clarté dans la représentation, la chaîne électrique n'est pas représentée.

Dans cette réalisation, deux trains épicycloïdaux 33 et 34 sont reliés entre eux de manière à présenter 4 degrés de liberté, un pour chaque arbre. Chaque train épicycloïdal comporte trois éléments qui engrènent entre eux. Ces trois éléments sont un planétaire, un porte-satellites portant des satellites, et une couronne. Dans chaque train, les satellites engrènent avec la couronne et le planétaire. Compte tenu de leur positionnement dans le train, les satellites ne peuvent pas être reliés directement à un des arbres du dispositif. En variante, chaque train comporte plus de trois éléments. Ainsi, dans un exemple, chaque train comporte une couronne à dentures extérieures qui engrène avec un quatrième élément. Dans un autre exemple, chaque train comporte plusieurs porte-satellites.

Dans cette réalisation, le porte-satellites 35 du premier train 33 est relié au porte-satellites 36 du deuxième train 34. En outre, le planétaire 37 du premier train 33 est relié à une couronne 38 du deuxième train 34. Ces deux liaisons permettent de limiter à quatre le nombre de degrés de liberté de l'ensemble 10 mécanique. Sans ces liaisons, cet ensemble 10 en comporterait en effet 6, trois pour chaque train.

Par ailleurs, l'arbre 2 du moteur 3 est relié au planétaire 37 du premier train 33. L'arbre 4 de roues 5 est relié au porte-satellites 36 du deuxième train 34 par l'intermédiaire de roues dentées 39 et 40 qui engrènent entre elles. L'arbre 8 de la première machine 6 est relié à une couronne 41 du premier train 33 par l'intermédiaire de roues dentées 42 et 43 qui engrènent entre elles.

L'arbre 9 de la deuxième machine 7 est susceptible d'être relié au porte-satellites 36 du deuxième train 34 dans le premier mode de fonctionnement. Cette liaison entre l'arbre 9 et le porte-satellites 36 est réalisée par l'intermédiaire du premier engrenage 12 qui est en prise avec une roue 45. L'arbre 9 de la deuxième machine 7 est également susceptible d'être relié au planétaire 46 du deuxième train 34 dans un deuxième mode de fonctionnement. Cette liaison entre l'arbre 9 et le planétaire 46 est réalisée par l'intermédiaire du deuxième engrenage 13 qui est en prise avec une roue 48.

Pour passer d'un mode à un autre, le dispositif 11 de commutation se déplace en translation le long de l'arbre 9 et passe d'une première position P1 à une deuxième position P2. Dans la première position P1, le dispositif 11 entraîne en rotation le premier engrenage 12. Dans la deuxième position P2, le dispositif 11 entraîne le deuxième engrenage 13 en rotation.

Par analogie avec la figure 1, le premier élément 10.1 mobile correspond ici au planétaire 37 du premier train 33. Le deuxième élément mobile 10.2 correspond à la couronne 41 du premier train 33. Le troisième élément mobile 10.3 correspond au porte-satellites 36 du deuxième train 34. Le quatrième élément mobile 10.4 correspond au planétaire 46 du deuxième train 34.

En variante, bien entendu, il est possible d'intervertir les liaisons entre les arbres 2, 4, 8 et 9 du dispositif 1 de transmission, et les éléments 36, 37, 41 et 46 auxquels sont susceptibles d'être reliés des arbres.

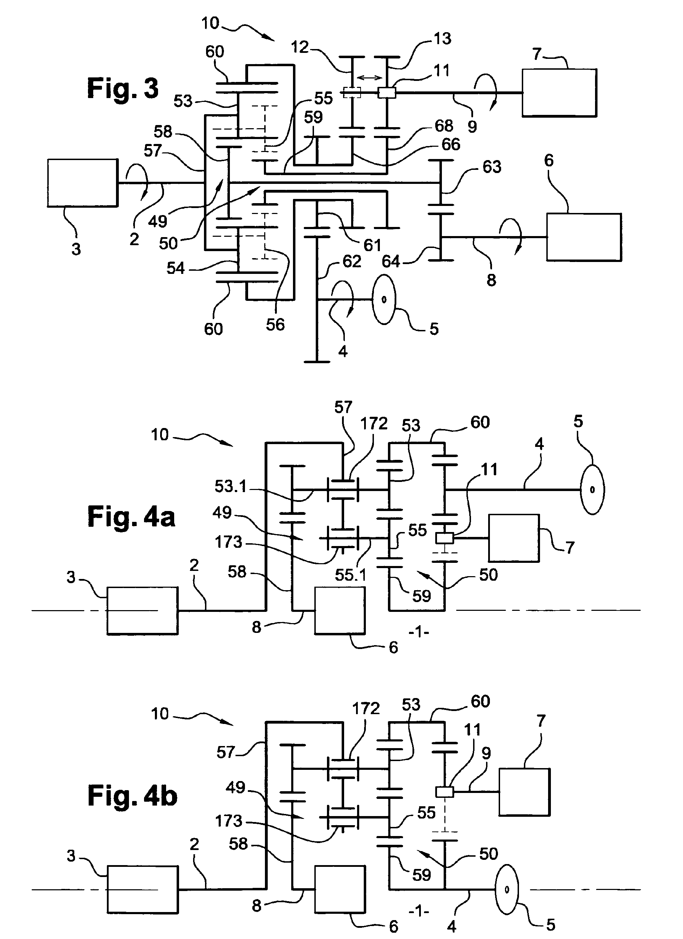

La figure 3 montre un dispositif 1 de transmission réalisé selon l'invention. Là encore, pour plus de clarté dans la représentation, la chaîne électrique n'est pas représentée.

Dans cette réalisation, deux trains 49 et 50 sont reliés entre eux d'une manière autre que celle qui est connue. En effet, conformément à l'invention, des satellites 53 et 54 du premier train 49 et des satellites 55 et 56 du deuxième train sont reliés entre eux par l'intermédiaire d'un porte-satellites 57 commun. En outre, les satellites 53 et 54 du premier train 49 et les satellites 55 et 56 du deuxième train 50 engrènent entre eux. Plus précisément, le satellite 53 du premier train 49 engrène avec le satellite 55 du deuxième train 50. Et le satellite 54 du premier train 49 engrène avec le satellite 56 du deuxième train 50.

L'introduction du porte-satellites 57 commun évite de devoir relier les portes-satellites de deux trains entre eux. En outre, comme les satellites engrènent entre eux, un élément du deuxième train 50 peut être supprimé. Dans cette réalisation, la couronne du deuxième train 50 a été supprimée et c'est la raison pour laquelle elle n'est pas représentée.

L'ensemble 10 mécanique représenté comporte ainsi 4 degrés de liberté. Cet ensemble 10 mécanique comporte donc quatre éléments mobiles utiles auxquels des arbres sont susceptibles d'être reliés. Le porte-satellites 57 commun est un premier élément mobile utile. Le planétaire 58 du premier train 49 est un deuxième élément mobile utile. Le planétaire 59 du deuxième train 50 est un troisième élément mobile utile. La couronne 60 du premier train 49 est un quatrième élément mobile utile. En revanche, les satellites 53-56 du premier et du deuxième train 49 et 50 ne constituent pas des éléments mobiles utiles.

Dans cette réalisation, l'arbre 2 du moteur 3 est relié au porte-satellites 57 commun. L'arbre 4 de roues 5 est relié à la couronne 60 du premier train 49 par l'intermédiaire de roues 61 et 62 qui engrènent entre elles. L'arbre 8 de la première machine 6 est relié au planétaire 58 du premier train 49 par intermédiaire de roues dentées 63 et 64 qui engrènent entre elles. L'arbre 9 de la deuxième machine 7 est susceptible d'être relié soit à la couronne 60 par l'intermédiaire du premier engrenage 12 et d'une roue dentée 66 qui engrènent entre eux. L'arbre 9 de la deuxième machine 7 est aussi susceptible d'être relié au planétaire 59 du deuxième train 50 par l'intermédiaire du deuxième engrenage 13 et d'une roue 68.

L'arbre 9 est relié à la couronne 60 du premier train 49 qui est en prise directe avec l'arbre 4 de roues 5 dans le premier mode de fonctionnement. L'arbre 9 de la deuxième machine 7 est relié au planétaire 59 du deuxième train 50 dans le deuxième mode de fonctionnement.

Comme précédemment, pour passer d'un mode à un autre, le crabot 11 se déplace le long de l'arbre 9 et assure une liaison soit avec le premier engrenage 12, soit avec le deuxième engrenage 13.

Si on conserve la couronne du deuxième train 50, l'arbre 9 de la deuxième machine 7 est susceptible d'être relié à trois éléments différents: la couronne 60 du premier train 49, le planétaire 60 du deuxième train 50 et la couronne (non représentée) du deuxième train 50. Le dispositif 1 de transmission peut alors fonctionner dans trois modes différents. Ces trois modes pourront par exemple être mis en oeuvre avec des véhicules de type poids lourds, de manière à rendre plus souple les changements de rapports de vitesses.

Dans la pratique, on utilise un train de type Ravigneaux qui possède déjà des satellites qui engrènent entre eux.

La figure 4a montre une autre représentation du dispositif 1 de transmission. Cette représentation laisse apparaître les liaisons cinématiques entre les différents éléments de l'ensemble 10 mécanique réalisé selon l'invention. Pour plus de simplicité, comme il existe une symétrie dans le schéma, seule une moitié de l'ensemble 10 mécanique est représentée.

Cette représentation met bien en évidence que les satellites 53 du premier train 49 engrènent avec le satellite 55 du deuxième train 50. En outre, il existe une liaison pivot 172 entre le porte-satellites 57 commun et l'engrenage 53. Il existe une deuxième liaison pivot 173 entre le porte-satellites 57 commun et le satellite 55. Les axes 53.1 et 55.1 des satellites sont parallèles entre eux.

Le satellite 53 du premier train 49 engrène en outre avec le planétaire 58 du premier train 49 et la couronne 60 de ce premier train 49. Le satellite 55 du deuxième train engrène avec le planétaire de ce deuxième train 49.

Comme précédemment, l'arbre 2 du moteur 3 est relié au porte-satellites 57 commun. L'arbre 4 de roues 5 est relié à la couronne 60 du premier train 49. L'arbre 8 de la première machine 6 est relié au planétaire 58 du premier train 49. L'arbre 9 de la deuxième machine 7 est susceptible d'être relié soit à la couronne 60 dans un premier mode de fonctionnement, soit au plantaire 59 du deuxième train 50 dans un deuxième mode de fonctionnement. Les liaisons de l'arbre 9 à la couronne 60 ou à l'arbre 4 sont réalisées par l'intermédiaire du crabot 11.

Les roues dentées assurant l'accouplement entre les arbres et les éléments de l'ensemble 10 ne sont pas représentées pour plus de simplicité.

La figure 4b montre une variante de réalisation du dispositif 1 de transmission selon l'invention. Dans cette variante, l'arbre 2 du moteur 3 est relié au porte-satellites 57 commun, tandis que l'arbre 4 de roues 5 est relié au planétaire 59 du deuxième train 50. L'arbre 8 de la première machine 6 est replié au planétaire 58 du premier train 49. L'arbre 9 de la deuxième machine 7 est susceptible d'être relié soit au planétaire 59 du deuxième train 50 dans un premier mode de fonctionnement, soit à la couronne 60 du premier train 49 dans un deuxième mode de fonctionnement.

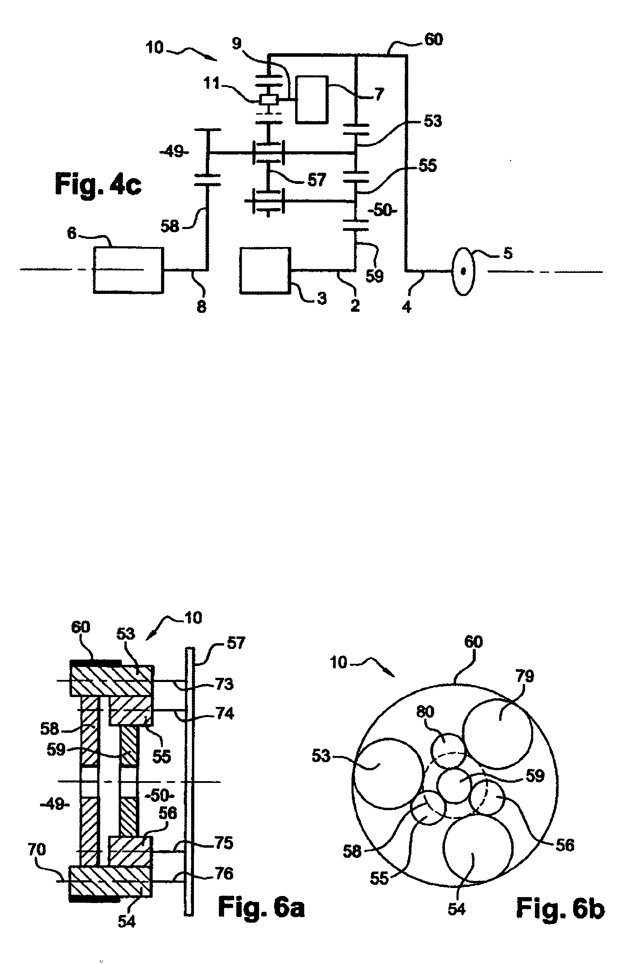

La figure 4c montre une autre variante de réalisation du dispositif 1 de transmission selon l'invention. Dans cette variante, l'arbre 2 du moteur 3 est relié au planétaire 59 du deuxième train 50, tandis que l'arbre 4 de roues 5 est retiré à la couronne 60 du premier train 49. L'arbre 8 de la première machine 6 est relié au planétaire 58 du premier train 49. L'arbre 9 de la deuxième machine 7 est susceptible d'être relié soit à la couronne 60 du premier train 49 dans un premier mode de fonctionnement, soit au porte satellites 57 commun dans un deuxième mode de fonctionnement.

Bien entendu, ces trois réalisations ne sont données qu'à titre Indicatif. L'arbre du moteur, les arbres des machines, et les arbres des roues peuvent indifféremment être reliés aux quatre éléments mobiles que sont ici le porte-satellites commun 57, les planétaires 58 et 59, et la couronne 60.

Les figures 6a et 6b montrent respectivement des vues de côtés et de dessus de l'ensemble 10 mécanique selon l'invention comportant deux trains dont les satellites engrènent mutuellement.

Dans la figure 6a, les satellites 53 et 54 du premier train 49 engrènent avec les satellites 55 et 56 du deuxième train 50. Des axes 73 et 76 des satellites 53 et 54 du premier train 49 sont parallèles à des axes 74 et 75 des satellites 55 et 56 du deuxième train 50. De préférence, les diamètres des satellites du premier et du deuxième train 49 et 50 sont différents.

Les axes 73-76 sont au contact du porte-satellites 57 commun et des satellites 53-56. Plus précisément, une des extrémités de ces axes 73-76 est accrochée au porte-satellites 57 commun, tandis que l'autre extrémité est reliée à un satellite par l'intermédiaire d'un roulement à billes. Ces axes 73-76 sont entraînés par le porte-satellites 57 commun.

Par ailleurs, le porte-satellites 57 commun possède un axe qui est confondu avec ceux des planétaires 58 et 59. Comme précité, les satellites 53 et 54 du premier train 49 engrènent en outre avec le planétaire 58 de ce premier train et la couronne 60 de ce premier train 49. Le planétaire 59 du deuxième train 50 engrène avec les satellites 55 et 56 de ce deuxième train 50.

La figure 6b montre une vue de dessus de l'ensemble 10 mécanique de la figure 6a. Chaque train comporte ici trois satellites. En variante, chaque train pourrait en comporter un, deux ou plus. De préférence, les satellites sont disposés de manière régulière à l'intérieur de la couronne 60. Les satellites 53, 54, 79 du premier train 49 et les satellites 55, 56, 80 du deuxième train 50 sont décalés entre eux de manière à ce qu'ils puissent engrener entre eux.

Les satellites 53, 54 et 79 du premier train 49 engrènent chacun avec le planétaire 58 du premier train 49 représenté en pointillés, la couronne 60 du premier train 50, ainsi que les satellites 55, 56 et 80 du deuxième train 50. Le planétaire 59 du deuxième train 50 engrène avec les satellites 55, 56 et 80 de ce deuxième train 50.

L'arbre du moteur, l'arbre de roue et les arbres des machines (non représentés sur la figure) sont chacun reliés à un des éléments de l'ensemble 10.

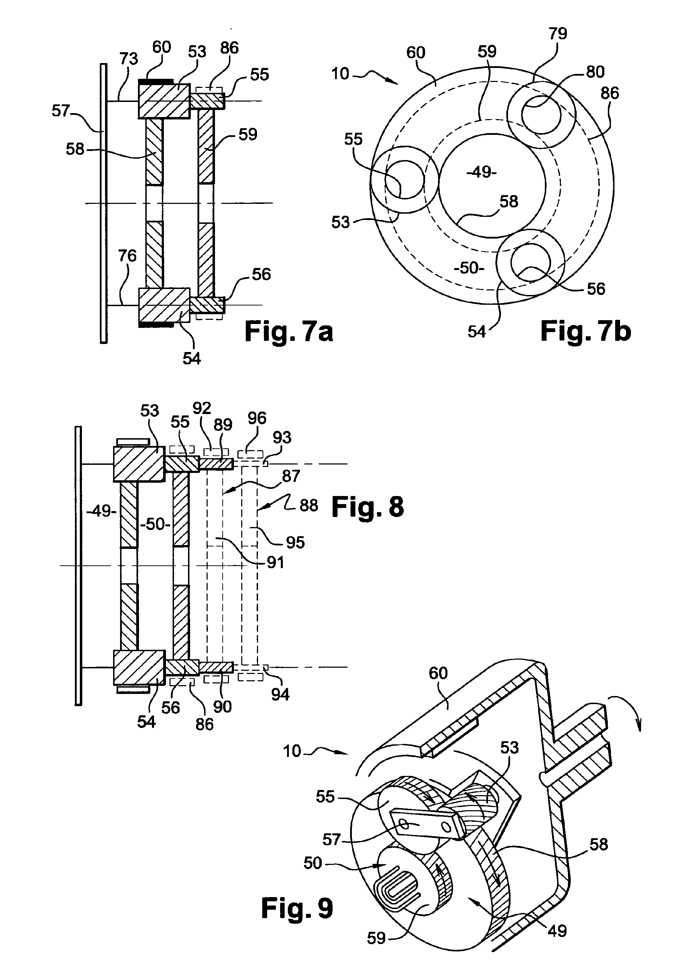

La figure 7a montre une vue de côté de l'ensemble 10 mécanique comportant des trains à satellites étagés. En effet, les satellites des deux trains 49 et 50 sont solidaires entre eux. En outre, les axes 73 et 76 des satellites 53 et 54 du premier train 49 et les axes 74 et 75 des satellites 55 et 56 du deuxième train 50 sont confondus deux à deux. De préférence, les diamètres des satellites du premier train 49 et du deuxième train 50 sont différents. Là encore, le porte-satellites 57 commun entraîne les axes 73 et 76 au contact de ce porte-satellites 57 et des satellites 53-56.

Les satellites 53 et 54 du premier train 49 sont reliés aux axes 73 et 76 qui sont eux-mêmes accrochés au porte-satellites 57 commun. Ces satellites 53 et 54 sont reliés aux axes 73 et 76 par l'intermédiaire d'un roulement à billes par exemple, de manière à ce que ces satellites 53 et 54 soient mobiles en rotation autour de ces axes 73 et 76.

Le planétaire 58 du premier train 49, le planétaire 59 du deuxième train 50 et le porte-satellites 57 commun sont encore coaxiaux dans cette réalisation. Le planétaire 58 du premier train 49 engrène avec les satellites 53 et 54 du premier train, tandis que le planétaire 59 du deuxième train 50 engrène avec les satellites 55 et 56 du deuxième train 50. La couronne 60 du premier train engrène avec les satellites 53 et 54 du premier train 49.

Cet ensemble 10 mécanique présente ainsi quatre degrés de liberté. Les arbres 2, 4, 8, 9 du dispositif 1 de transmission peuvent ainsi être reliés chacun à un des planétaires 58 ou 59, au porte-satellites 57 commun, ou à la couronne 60.

En variante, on introduit la couronne 86 du deuxième train 50. Cette couronne 86 engrène avec les satellites 55 et 56 du deuxième train 50. Cette couronne 86 introduit un degré de liberté supplémentaire. L'ensemble 10 comporte alors 5 degrés de liberté. Dans cette variante, un arbre d'une des machines 6 ou 7 est susceptible d'être relié à trois éléments mobiles différents. Le dispositif 1 de transmission selon l'invention comporte donc trois modes de fonctionnement différents. La sélection d'un des modes est effectuée en fonction du rapport de vitesse désiré. Cette sélection est effectuée, de manière à ce que le moteur thermique fonctionne toujours à son point de fonctionnement optimal. Pour une puissance donnée, ce point de fonctionnement optimal correspond au régime auquel le moteur consomme le moins d'énergie, soit le régime le plus faible possible.

La figure 7b montre une vue de dessus de l'ensemble 10 de la figure 7a. Cette vue de dessus met en évidence que chacun des trains comporte trois satellites. De préférence, ces satellites sont disposés de manière régulière à l'intérieur de la couronne 60. Ainsi, deux droites passant respectivement par le centre d'un satellite et le centre de la couronne 60 forment un angle de 120°. Les satellites 53, 54 et 79 du premier train 49, et les satellites 55, 56 et 80 du deuxième train 50 sont concentriques et liés entre eux.

Par ailleurs, les satellites 53, 54 et 79 du premier train 49 engrènent avec la couronne 60 de ce premier train 49, ainsi qu'avec le planétaire 58 de ce premier train 60. Les satellites 55, 56 et 81 du deuxième train 50 engrènent avec le planétaire 59 de ce deuxième train 50. Lorsque l'ensemble 10 présente 5 degrés de liberté, les satellites 55, 56 et 80 du deuxième train 50 engrènent en outre avec la couronne 86 du deuxième train 50 représentée en pointillés.

La figure 8 montre un exemple de réalisation d'un ensemble 10 mécanique comportant N trains épicycloïdaux.

Lorsque deux trains 49 et 50 sont reliés entre eux et qu'un des trains ne comporte pas de couronne, on dispose de 4 degrés de liberté. Deux degrés de liberté sont réservés à l'arbre du moteur et à l'arbre de roues. Les deux autres degrés de liberté sont réservés aux arbres des machines. Ces deux autres degrés de liberté correspondent aux deux modes de fonctionnement du dispositif 1 de transmission selon l'invention.

Si on introduit une couronne 86 supplémentaire comme précité, on introduit un nouvel élément mobile auquel un arbre d'une des machines est susceptible d'être relié. On introduit donc un nouveau mode de fonctionnement.

Si on introduit en plus un troisième train 87 comportant des satellites 89 et 90 reliés aux satellites du deuxième train 50, un planétaire 91, et une couronne 92, alors on introduit deux nouveaux éléments mobiles : la couronne 92 et le planétaire 91. Un arbre d'une des machines est susceptible d'être relié à un de ces deux nouveaux éléments mobiles. On introduit ainsi deux nouveaux modes de fonctionnement du dispositif 1 de transmission.

Si on introduit en plus un quatrième train 88 comportant des satellites 93 et 94 reliés aux satellites 89 et 90 du troisième train 87, un planétaire 95 et une couronne 96, alors on introduit à nouveau deux éléments mobiles auxquels un arbre d'une des machines est susceptible d'être relié. On introduit de ce fait encore deux nouveaux modes de fonctionnement.

En conséquence, dans l'invention, avec N+1 trains épicycloïdaux, le dispositif 1 de transmission est susceptible de fonctionner dans 2N+1 modes de fonctionnement différents.

La généralisation de l'invention à N+1 trains est représentée ici pour des trains 49, 50, 87, 88 comportant des satellites qui sont étagés. Toutefois, cette généralisation est aussi valable pour un ensemble 10 mécanique comportant des satellites qui engrènent mutuellement. La relation entre le nombre de modes possibles et le nombre de trains reliés entre eux demeure la même pour N+1 trains comportant des satellites qui engrènent entre eux.

La figure 9 montre une représentation en trois dimensions d'un ensemble 10 mécanique selon l'invention. Cet ensemble 10 comporte deux trains épicycloïdaux 49 et 50 dont les satellites engrènent mutuellement.

Plus précisément, le premier train 49 comporte le planétaire 58, le satellite 53 et la couronne 60. Le deuxième train 50 comporte le planétaire 59 et le satellite 55. Les axes des satellites 53 et 55 sont reliés au porte-satellite 57 commun. Un satellite de chaque train est ici représenté, toutefois, ces trains 49 et 50 en comportent généralement plus.

Le satellite 53 du premier train 49 engrène avec le planétaire 58 et la couronne 60 de ce premier train. Le satellite 55 du deuxième train 50 engrène quant à lui avec le planétaire 59 de ce deuxième train 50.

En outre, le satellite 53 du premier train 46 engrène avec le satellite 55 du deuxième train 50. Ces deux satellites 53 et 55 sont reliés au porte-satellite 57 commun. Cet ensemble 10 correspond donc à un train de type Ravigneaux.

Le planétaire 58 du premier train 49, le satellite 55 du deuxième train 50, et la couronne 60 du premier train 49 possèdent des sens de rotation identiques.

## Revendications

1. Dispositif (1) de transmission de puissance, dans un véhicule, entre un arbre (2) d'un moteur (3) thermique et un arbre (4) de roues (5), comportant
- une première et une deuxième machine (6, 7) électrique dont une (7) est déportée par rapport à l'arbre (2) du moteur thermique (3), et
- un ensemble (10) mécanique reliant entre eux l'arbre (2) du moteur (3), l'arbre (4) de roues (5), et des arbres (8, 9) des deux machines (6, 7) électriques, cet ensemble (10) mécanique comportant des premier (49) et deuxième trains (50) épicycloïdaux reliés entre eux, ces premier et deuxième trains (49, 50) épicycloïdaux comportant chacun plusieurs éléments qui engrènent entre eux dont une couronne (60), des satellites (53, 55) reliés à un porte-satellites (57), et un planétaire (58, 59),
- les premier et deuxième trains épicycloïdaux (49, 50) comportant un porte-satellites (57) commun qui entraîne des axes (73, 74) au contact du porte-satellites commun (57) et des satellites (53,-55),
ledit dispositif comportant en outre un élément commutateur (11-13), comportant notamment un crabot, accroché sur l'arbre (9) de la machine déportée (7), cet élément commutateur (11-13) assurant une liaison sélective de cet arbre (9) soit avec un premier (59), soit avec un deuxième (60) élément mobile de l'ensemble (10) mécanique, ce premier (59) et ce deuxième (60) élément étant différents et distincts, **caractérisé en ce que**
les premier (49) et deuxième trains (50) comportent respectivement, au moins un satellite (53, 55), le satellite (53) du premier train (49) et le satellite (55) du deuxième train (50) étant décalés entre eux de manière à ce qu'ils puissent engrener entre eux et **en ce que** :
- le moteur (3) thermique est relié au porte-satellites (57) commun,
- l'arbre (4) de roues (5) est relié à la couronne (60) du premier train (49),
- l'arbre (8) de la première machine (6) est relié au planétaire (58) du premier train (49), et
- l'arbre (9) de la deuxième machine (7) est susceptible d'être relié soit à la couronne (60) du premier train (49) dans un premier mode de fonctionnement, soit au planétaire (59) du deuxième train (50) dans un deuxième mode fonctionnement.

2. Dispositif selon la revendication 1 , **caractérisé en ce que** les satellites (53, 55) des premier et deuxième trains (49, 50) possèdent des diamètres différents.

3. Dispositif selon l'une des revendications 1 ou 2, **caractérisé en ce que** le deuxième train (50) est dépourvu de couronne.

4. Dispositif selon l'une des revendications précédentes, **caractérisé en ce que** l'arbre (8, 9) d'une des machines (6, 7) électriques est susceptible d'être lié à deux éléments (59, 60) mobiles distincts, chaque liaison correspondant à un mode de fonctionnement du dispositif (1) de transmission.

5. Dispositif selon l'une des revendication 1 à 4, **caractérisé en ce que**:
- l'arbre (8, 9) d'une des machines (6, 7) électriques est susceptible d'être relié à trois éléments (59, 60, 86) mobiles distincts, chaque liaison correspondant à un mode de fonctionnement du dispositif (1) de transmission.

6. Dispositif selon l'une des revendications précédentes, **caractérisé en ce qu'**il comporte un dispositif (14) de liaison électrique qui relie les deux machines (6, 7) électriques entre elles.

## Claims

1. A power transmission device (1), in a vehicle, between a shaft (2) of a heat engine (3) and a shaft (4) of wheels (5), comprising
- a first and a second electric machine (6, 7), one (7) of which is offset with respect to the shaft (2) of the heat engine (3), and
- a mechanical assembly (10) connecting the shaft (2) of the engine (3), the shaft (4) of wheels (5, and shafts (8, 9) of the two electric machines (6, 7) to one another, this mechanical assembly (10) comprising first (49) and second (50) interconnected planetary gear trains (50), these first and second planetary gear trains (49, 50) each comprising several intermeshing elements, including a ring gear (60), planet gears (53, 55) connected to a planet carrier (57), and a sun gear (58, 59),
- the first and second planetary gear trains (49, 50) comprising a common planet carrier (57) which drives shafts (73, 74) in contact with the common planet carrier (57) and the planet gears (53, 55),
the said device further comprising a switching element (11-13), comprising in particular a dog, attached to the shaft (9) of the offset machine (7), this switching element (11-13) ensuring a selective connection of this shaft (9) either with a first (59) or with a second (60) mobile element of the mechanical assembly (10), this first (59) and this second (60) element being different and distinct, **characterized in that**
the first (49) and second (50) trains comprise respectively at least one planet gear (53, 55), the planet gear (53) of the first train (49) and the planet gear (55) of the second train (50) being staggered with respect to each other so that they can mesh with each other and **in that**:
- the heat engine ((3) is connected to the common planet carrier (57),
- the shaft (4) of wheels (5) is connected to the ring gear (60) of the first train (49),
- the shaft (8) of the first machine (6) is connected to the sun gear (58) of the first train (49), and
- the shaft (9) of the second machine (7) is capable of being connected either to the ring gear (60) of the first train (49) in a first mode of operation, or to the sun gear (59) of the second train (50) in a second mode of operation.

2. The device according to Claim 1, **characterized in that** the planet gears (53, 55) of the first and second trains (49, 50) have different diameters.

3. The device according to one of Claims 1 or 2, **characterized in that** the second train (50) is without a ring gear.

4. The device according to one of the preceding claims, **characterized in that** the shaft (8, 9) of one of the electric machines (6, 7) is capable of being connected to two distinct mobile elements (59, 60), each connection corresponding to a mode of operation of the transmission device (1).

5. The device according to one of Claims 1 to 4, **characterized in that**:
- the shaft (8, 9) of one of the electric machines (6, 7) is capable of being connected to three distinct mobile elements (59, 60, 86), each connection corresponding to a mode of operation of the transmission device (1).

6. The device according to one of the preceding claims, **characterized in that** it comprises an electric connection device (14) which connects the two electric machines (6, 7) to one another.

## Patentansprüche

1. Vorrichtung (1) zum Übertragen von Leistung, in einem Fahrzeug, zwischen einer Welle (2) eines Verbrennungsmotors (3) und einer Welle (4) von Rädern (5), mit
- einer ersten und einer zweiten Elektromaschine (6, 7), von welchen eine (7) im Vergleich zur Welle (2) des Verbrennungsmotors (3) versetzt ist, und
- einer mechanischen Einheit (10), die untereinander die Welle (2) des Motors (3), die Welle (5) von Rädern (5) und Wellen (8, 9) der zwei Elektromaschinen (6, 7) verbindet, wobei die mechanische Einheit einen ersten (49) und einen zweiten (50) Planetengetriebezug, die untereinander verbunden sind, aufweist, wobei dieser erste und der zweite Planetengetriebezug (49, 50) jeweils mehrere Elemente aufweisen, die ineinander eingreifen, darunter ein Kranz (60), Satellitenräder (53, 55), die mit einem Satellitenradträger (57) verbunden sind, und ein Planetenrad (58, 59),
- wobei der erste und der zweite Planetengetriebezug (49, 50) einen gemeinsamen Satellitenradträger (57) aufweisen, der Achsen (73, 74) in Berührung mit dem gemeinsamen Satellitenradträger (57) und den Satellitenrädern (53, 55) antreibt,
wobei die Vorrichtung ferner ein Umschaltelement (11-13) aufweist, das insbesondere eine Klaue aufweist, die an der Welle (9) der versetzten Maschine (7) angehängt ist, wobei dieses Umschaltelement (11-13) eine selektive Verbindung dieser Welle (9) entweder mit einem ersten (59) oder einem zweiten (60) beweglichen Element der mechanischen Einheit (10) sicherstellt, wobei dieses erste (59) und dieses zweite (60) Element unterschiedlich und getrennt sind, **dadurch gekennzeichnet, dass**
der erste (49) und der zweite (50) Planetengetriebezug jeweils mindestens ein Satellitenrad (53, 55) aufweisen, wobei das Satellitenrad (53) des ersten Planetengetriebezugs (49) und das Satellitenrad (55) des zweiten Planetengetriebezugs (50) untereinander derart versetzt sind, dass sie ineinander eingreifen können, und dass:
- der Verbrennungsmotor (3) mit dem gemeinsamen Satellitenradträger (57) verbunden ist,
- die Welle (4) von Rädern (5) mit dem Kranz (60) des ersten Planetengetriebezugs (49) verbunden ist,
- die Welle (8) der ersten Maschine (6) mit dem Planetenrad (58) des ersten Planetengetriebezugs verbunden ist, und
- die Welle (9) der zweiten Maschine (7) entweder mit dem Kranz (60) des ersten Planetengetriebezugs (49) bei einer ersten Betriebsart, oder mit dem Planetenrad (59) des zweiten Planetengetriebezugs (50) bei einer zweiten Betriebsart verbunden ist.

2. Vorrichtung nach Anspruch 1, **dadurch gekennzeichnet, dass** die Satellitenräder (53, 55) des ersten und des zweiten Planetengetriebezugs (49, 50) unterschiedliche Durchmesser aufweisen.

3. Vorrichtung nach einem der Ansprüche 1 oder 2, **dadurch gekennzeichnet, dass** der zweite Planetengetriebezug (50) keinen Kranz aufweist.

4. Vorrichtung nach einem der vorhergehenden Ansprüche, **dadurch gekennzeichnet, dass** die Welle (8, 9) einer der Elektromaschinen (6, 7) mit zwei unterschiedlichen beweglichen Elementen (59, 60) verbunden werden kann, wobei jede Verbindung eine Betriebsart der Übertragungsvorrichtung (1) entspricht.

5. Vorrichtung nach einem der Ansprüche 1 bis 4, **dadurch gekennzeichnet, dass**:
- die Welle (8, 9) einer der Elektromaschinen (6, 7) mit drei unterschiedlichen beweglichen Elementen (59, 60, 86) verbunden werden kann, wobei jede Verbindung einer Betriebsart der Übertragungsvorrichtung (1) entspricht.

6. Vorrichtung nach einem der vorhergehenden Ansprüche, **dadurch gekennzeichnet, dass** sie eine elektrische Verbindungsvorrichtung (14) aufweist, die die zwei Elektromaschinen (6, 7) untereinander verbindet.
